# EUROPEAN PATENT SPECIFICATION

(11) **EP 0 972 477 B1**
(45) Date of publication and mention of the grant of the patent: **04.10.2001**
(21) Application number: 98308937.6
(22) Date of filing: 02.11.1998
(51) Int. Cl.: A47J 27/04

(54) **Food steamer**
Dampfkochgerät für Nahrungsmittel
Cuiseur à vapeur pour aliments

(30) Priority: 16.07.1998 US 116232
(43) Date of publication of application: 19.01.2000
(73) Proprietor: Wing Shing Products (BVI) Co. Ltd., Road Town, Tortola (VG)
(72) Inventor: Wing Shing Products (BVI) Co. Ltd., Road Town, Tortola (VG)
(74) Representative: Woodward, John Calvin

(56) References cited:
- EP-A- 0 788 754
- DE-A- 2 846 339
- DE-U- 29 802 268
- GB-A- 2 295 533
- US-A- 5 097 753
- US-A- 5 552 577

## Description

The present invention relates to household cooking appliances and, more particularly, to a food steamer having a removable tank for supplying water to make instantaneous steam.

In recent times, household food steamer appliances have become very popular. One such appliance for steaming food is illustrated in US patent No. 5404803 and includes a water tank in which steam is generated. The steam from the water tank then passes into an adjacent cooking vessel through a spout. The spout plus into the water tank, thus making the water vessel removable with respect to the cooking vessel in which the food is disposed. The removable water tank facilitates cleaning of the appliance after use. The appliance has a section for juices or material which drop from the steamed food so that it is not reboiled by the steamer appliance. The cooking vessel and the water vessel are each mounted on their own individual bases, thus making each section independent of the other.

The present invention is similar to the steam utensil described above, but includes some important improvements.

It is known from US 5,552,577 to provide a food steaming appliance, comprising a cabinet for steaming food, a tank to supply water to steam generating means and means for supplying steam to the cabinet, and a base for supporting both the tank and the cabinet, both of which are removably mounted on said base.

A food steaming appliance according to the present invention is characterised in that a reservoir is disposed in said base to receive water from the water supply tank, the base including regulating means for controlling the flow of water from the water supply tank to the reservoir.

In a preferred embodiment, the steam generating means comprises heating means disposed in the base which receives water from the reservoir and converts it into steam.

Preferably a drip tray is disposed between the steam cabinet and the base unit.

Conveniently, the heating means is a substantially circular heating tube which directs the steam to the steam cabinet through the drip tray.

A steam cap is preferably disposed on top of the base, said steam cap being in fluid communication with the heating means which preferably is a substantially circular heating tube.

Similarly, the water supply tank is provided with a spring biased check valve for preventing leakage when the water supply tank is removed from the base for filling.

Preferably, a flexible conduit is disposed between the water supply tank and the reservoir for conveying water from the water supply tank to the reservoir.

Preferably the reservoir includes means for filling it with water to a given level.

The heating means is preferably operable to continue to receive water from the reservoir even after removal of the water supply tank from the base.

The steam appliance of this invention is a more compact and efficient design in that both the water tank and the steam cabinet or cooking vessel are removably mounted on a common base. Water from the water tank flows through a trap into a reservoir located in the centre of the common base. The flow of water from the tank is automatically regulated. The flow stops automatically when a valve needle is closed by high pressure generated inside the circular heating tube.

In the preferred embodiment, steam is generated while the water in the reservoir is fed to a hollow circular heating tube. The circular tube allows for efficient transfer of heat to the water, thus permitting the water to flash into steam within seconds. The steam, which is under high pressure within the heating tube, leaves the heating tube horizontally through a steam cap. The steam then rises quickly into the cooking vessel disposed directly above the heating tube.

In the preferred embodiment, water entering the hollow heating tube causes the water level in the reservoir to drop, thus causing the flow of additional water from the tank to the reservoir. This automatic flow regulation provides for continuous and smooth steam generation within the appliance. The separate reservoir located in the common base unit allows the water tank to be removed while stem is still being generated. The reservoir contains enough residual water to allow steam generation to continue for a sufficient time to allow the tank to be replenished. This is an important advantage over the known food steamers, because it means that the tank can be refilled without interrupting the cooking cycle.

The food steamer of the invention comprises a base unit that commonly supports both a water supply tank and a steam cabinet for steaming food. The steam cabinet preferably comprises a lower drip tray for catching the juices of food being steamed within the cabinet, and a removable lid containing a handle. The lid is removable for inserting food into the steam cabinet. The common base unit preferably includes controls for setting cooking cycle parameters. Water from the water supply tank flows into a reservoir located in the centre of the common base unit. The flow of water from the tank is automatically regulated. Water flows into the reservoir through a trap located in the bottom of the tank. Preferably, the flow automatically stops when a valve needle is closed by high pressure generated inside the circular heating tube. When the pressure inside the circular heating tube drops, the valve needle opens again and allows water from the reservoir to enter the hollow circular heating tube for generating steam. The water level in the reservoir drops as the water enters the heating tube, thus causing additional water flow from the tank to the reservoir. This automatic flow regulation provides continuous and smooth steam generation to take place within the appliance.

The preferred circular heating tube provides an efficient transfer of heat to the water, thus allowing the water to flash into steam within seconds. The steam, which is under high pressure within the heating tube, leaves the tube horizontally through a steam cap. The steam then quickly rises into the cooking cabinet disposed directly above the heating tube and base unit. The reservoir located in the common base unit allows the water tank to be removed, while steam is still being generated. The reservoir contains enough residual water to permit steam generation to continue while the tank is refilled.

The preferred food steamer of the invention has a self regulating water flow.

The present invention will now be described, by way of example only, with reference to the accompanying drawings, in which:
Figure 1 is an exploded perspective view of a preferred food steamer appliance of the invention;
Figure 2 is a front view of the food steamer appliance shown in Figure 1;
Figure 3 is a front sectional view of the food steamer appliance shown in Figure 1;

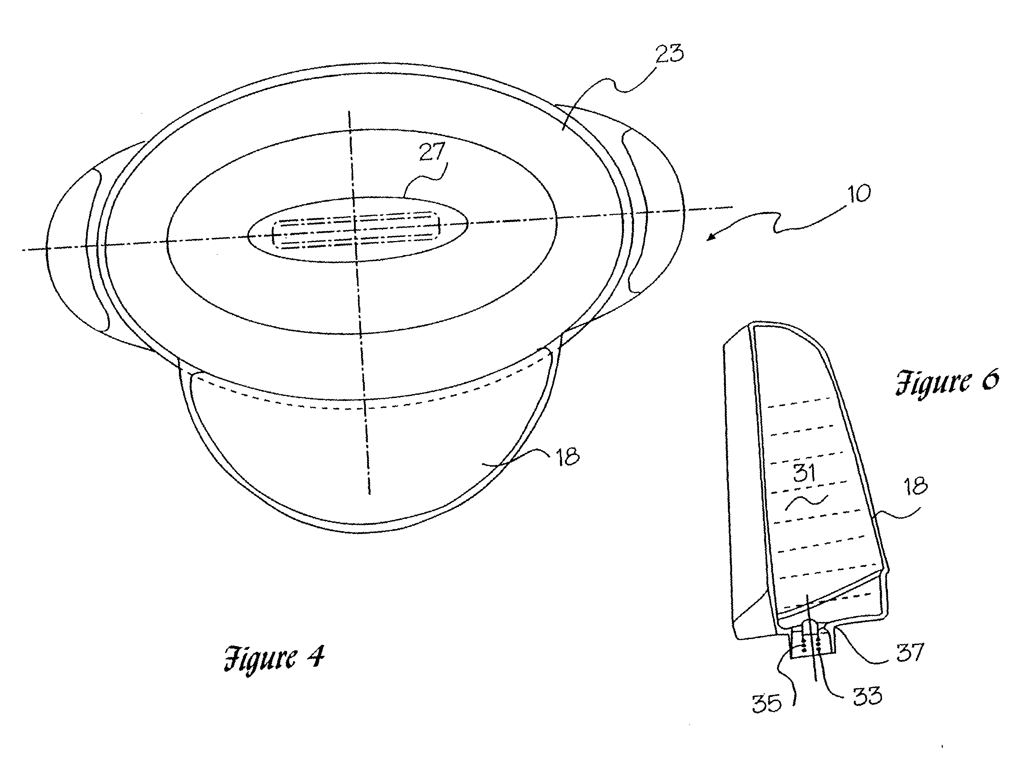

Figure 4 is a top view of the food steamer appliance shown in Figure 1;
Figure 5 is a top view of a steam cap fitted to the food steamer appliance shown in Figure 1;
Figure 6 is a side view of the water supply tank shown in Figure 3, when disassembled from the base;
Figures 7a-7c are respectively top, bottom, and sectional views of the heating tube of the food steamer appliance shown in Figure 3; and
Figure 8 is an underneath bottom view of the food steamer of Figure 1.

The same or similar components use the same reference numerals throughout the Figures and following description.

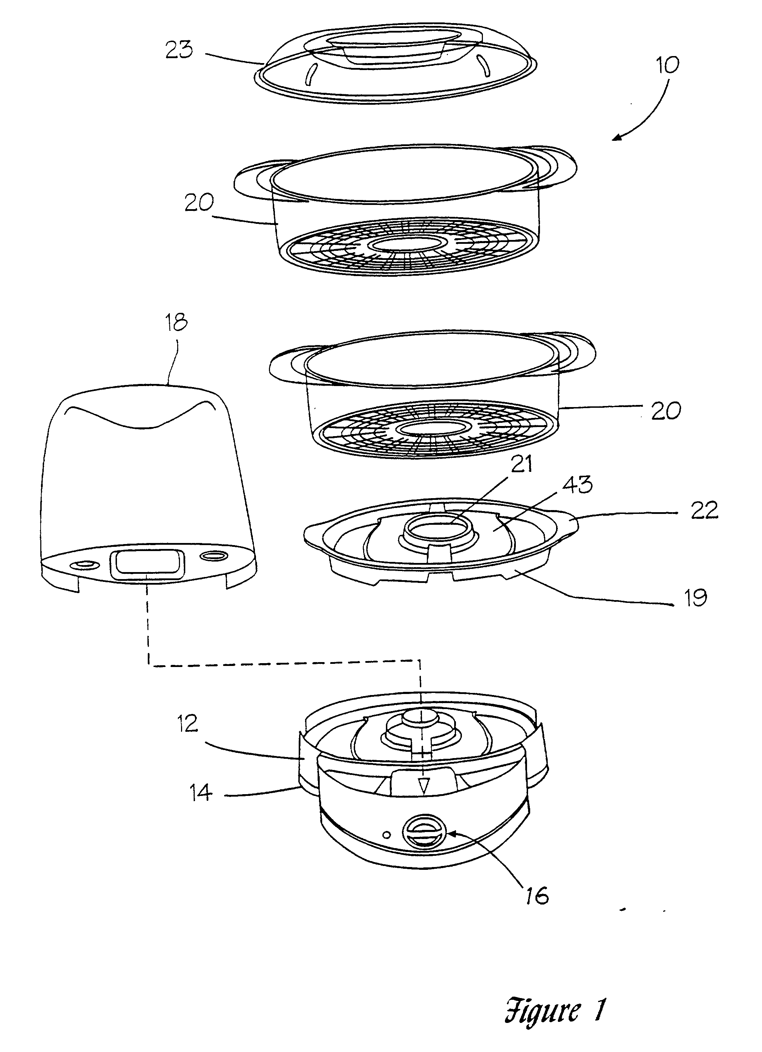

Now referring to Figure 1, there is shown an exploded, perspective view of a food steamer appliance 10 of the present invention which comprises a base unit 12 with a handle 14 thereon and a timer control knob 16 for setting the time for the food cooking cycle.

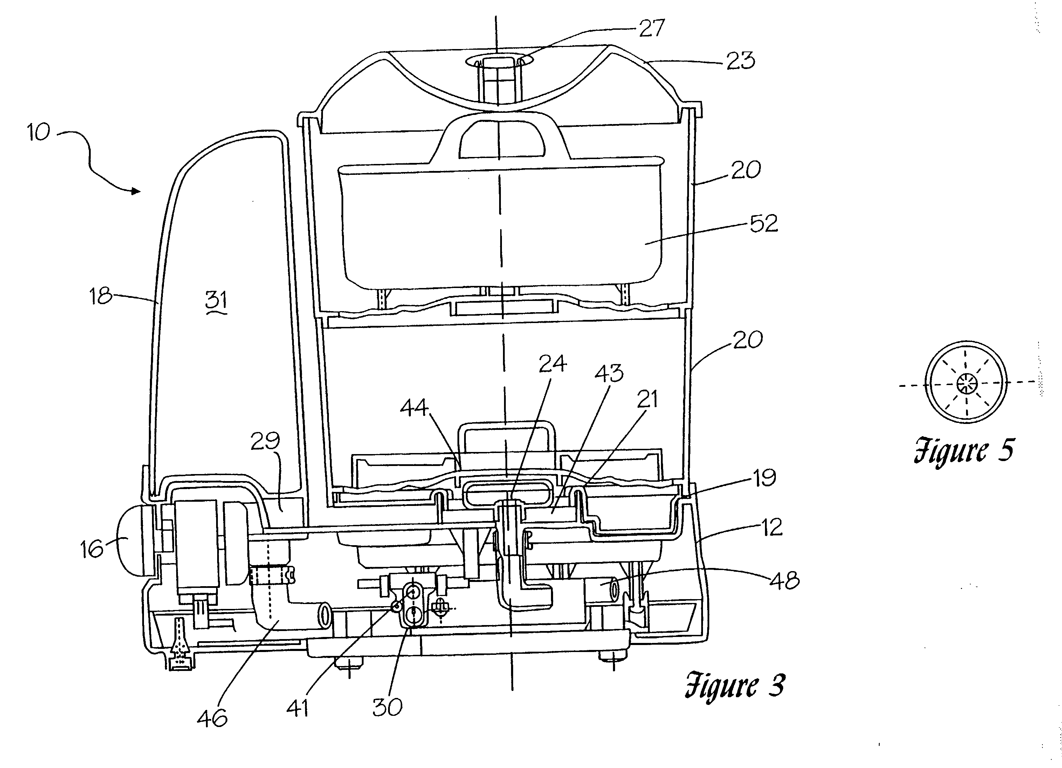

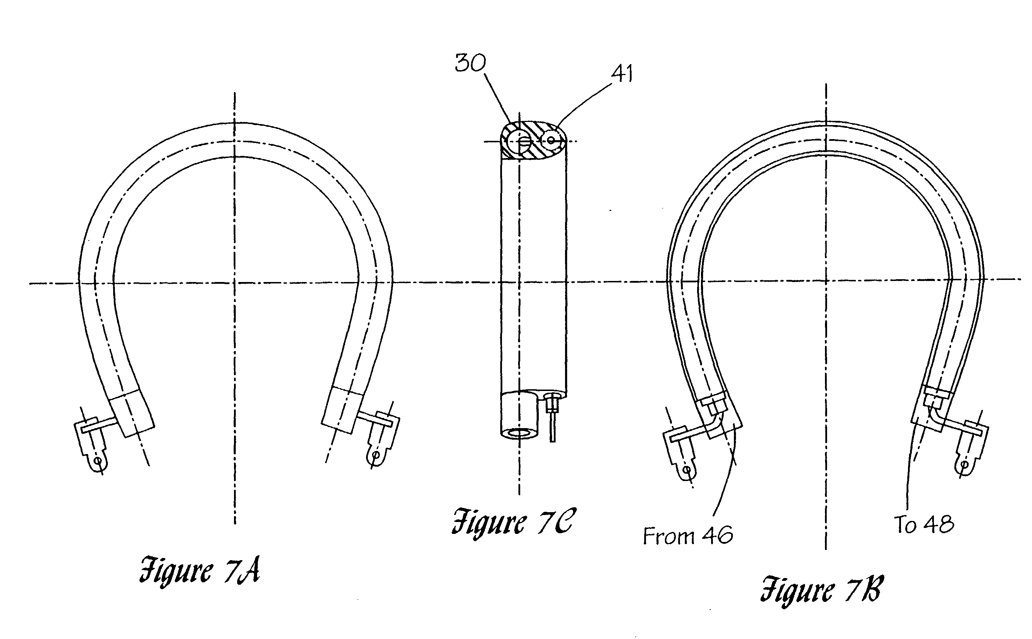

Preferably, a circular heating tube element 30, shown more clearly in Figure 7c is mounted on the base unit 12 as shown in Figure 3.. The electricity supply to an electrical coil in tube element 30 is controlled by means of the control knob 16 which sets the cooking time. The control knob 16 can also include a lamp bulb to illuminate the knob. A transparent removable water tank 18 which supplies water to the heating tube element 30 is mounted on the base 12 above the knob 16. Water 31 in the supply tank 18 is fed to a reservoir 29 (see Figure 3).

As shown in Figures 1 and 3, steam heated by the heating tube element 30 is directed upwardly from the base unit 12 to a steam cabinet or tray 20 which comprises two decks in which different foods can be steamed. A removable bowl 52 can be placed in the steam tray 20 if desired (see Figure 3). The lower tray 20 rests on a drip tray 19 which itself rests on the base unit 12. The drip tray 19 catches cooking juices from the steamed food, not shown. As can be best seen in Figure 3, steam from the base unit 12 travels from the heating tube 30 via flexible conduit 48 connected thereto to a steam nozzle 24 disposed upon the base unit 12, and then through an aperture 21 disposed in the centre of the drip tray 19. A handle 22 provided on the drip tray 19 (see Figure 1) allows it to be removed from the base unit 12 for cleaning purposes. As aforementioned, the drip tray 19 catches the juices or any other material from the steamed food so that they do not circulate with the boiling water.

The uppermost steam tray 20 is covered with a lid 23 having a handle 27 thereon. The water tank 18 has an inlet in the bottom thereof through which water can be introduced to the tank 18 by opening an inlet.

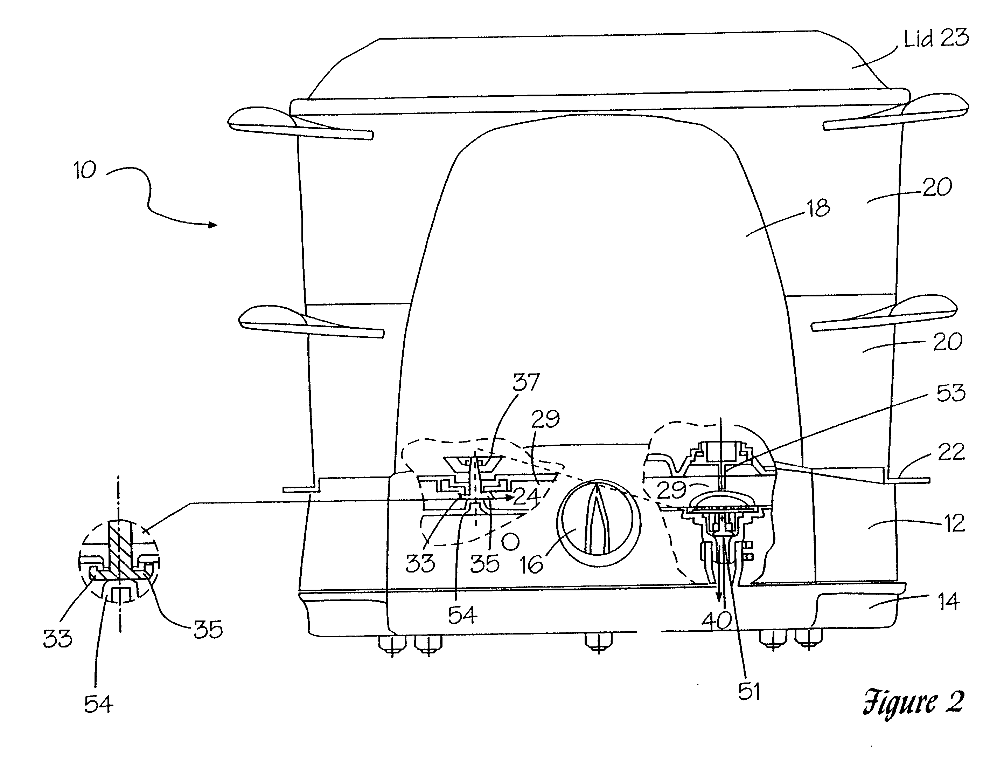

Referring now to Figure 6, water 31 in the supply tank 18 flows past a spring biased flow check valve 37 which is biased to the closed position when the tank 18 is removed to prevent water 31 leaking from the tank 18 during filling . Once filled, the water supply tank 18 can be fitted to the reservoir 29, as shown in Figure 3. Placing the water tank 18 over short boss 54 causes plunger 33 to push against biasing spring 35 of the check valve 37 (see Figure 2), thus lifting it from its seated position. The unseated valve 37 then allows water 31 in the tank 18 to flow into reservoir 29, which conveys it via needle valve 51 to circular heating tube 30.

As the water 31 is fed in the direction of arrows 40 (see Figure 2) from the reservoir 29 to the heating tube 30 for the generation of steam, the water level in the reservoir 29 will drop, thus causing more water 31 to flow from tank 18. The water 31 in the heating tube 30 is heated by heating coil 41 to a temperature which changes it to steam. When steam is generated inside the circular heating tube 30, a high pressure is created therein which closes the needle valve 51 to stop further water flowing in. As the steam flows out from steam cap 44 (see Figures 3 and 5), the pressure inside the circular heating tube drops and water 31 again flows into it for the next cycle of steam generation.

The steam then travels upwardly to the steam cap 44 (shown in top view in Figure 5) and through aperture 21 formed in solid abutment 43 (see Figure 1) into the steam trays 20.

Referring to Figures 3a and 7b, it can be seen that water in the heating tube 30 flows into, and exits therefrom via conduits46 and 48, respectively.

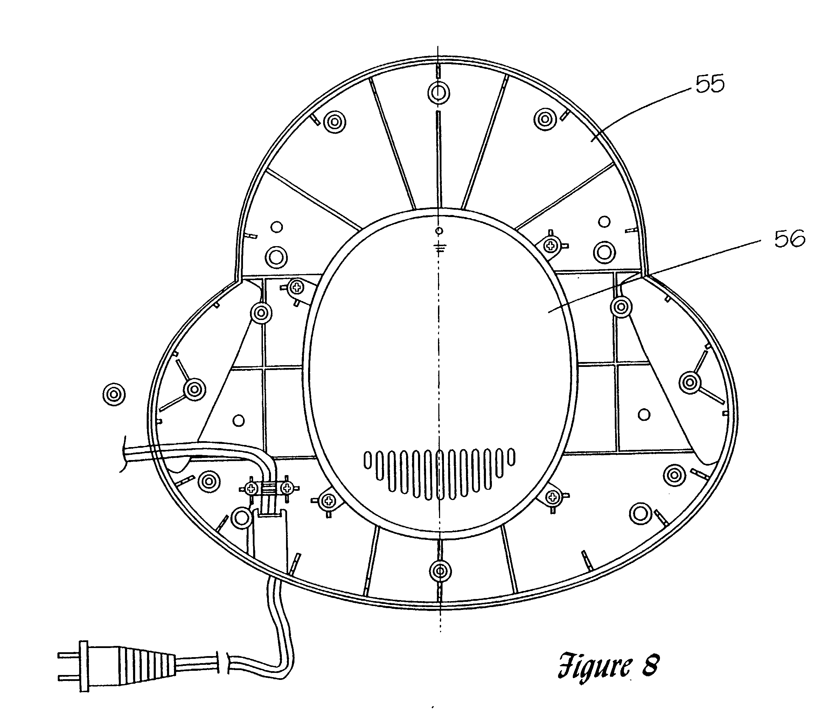

Figure 8 shows metal bottom plate 56 attached to plastic bottom 55 of the base unit 12.

All of the components of the appliance 10 are removable from the base unit 12, and are easily cleaned. The components are preferably made of plastic polymer materials, such as polycarbonates or styrene, which are suitable for machine or hand washing.

It will be appreciated from the foregoing description that the preferred food steaming device of the invention has a base unit 12 which supports both removable food steam cabinets 20 and removable water supply tank 18 for ease of cleaning. The device also provides automatic water flow regulation from the water supply tank 18 and a continual steam supply from the base unit despite removal of the water tank.

## Claims

1. A food steaming appliance, comprising:
a cabinet (20) for steaming food, a tank (18) to supply water to steam generating means (30) and means (24, 48) for supplying steam to the cabinet (20), and a base (12) for supporting both the tank (18) and the cabinet (20), both of which are removably mounted on said base, **characterised in that** a reservoir (29) is disposed in said base (12) to receive water from the water supply tank (18), the base including regulating means (33, 35, 37) for controlling the flow of water from the water supply tank (18) to the reservoir (29).

2. An appliance as claimed in claim 1, **characterised in that** the steam generating means comprises heating means (30) disposed in the base (12) which receives water from the reservoir (29) and converts it into steam.

3. An appliance as claimed in claim 1 or claim 2, **characterised by** a drip tray (19) disposed between the steam cabinet (20) and the base (12).

4. An appliance as claimed in claim 3, **characterised in that** said heating means directs the steam to the steam cabinet (20) through the drip tray (19).

5. An appliance as claimed in any of claims 2 to 4, **characterised in that** the heating means comprises a substantially circular heating tube (30).

6. An appliance as claimed in claim 5, **characterised by** a steam cap (44) disposed on top of the base (12), said steam cap being in fluid communication with the circular heating tube (30).

7. An appliance as claimed in any preceding claim, **characterised in that** the heating means (30) is operable to continue to receive water from the reservoir (29) even after removal of the water supply tank (18) from the base (12).

8. An appliance as claimed in any preceding claim, **characterised in that** the water supply tank (18) is provided with a spring biased check valve (37) for preventing leakage when the water supply tank (18) is removed from the base (12).

9. An appliance as claimed in any preceding claim, **characterised by** a flexible conduit (48) disposed between the water supply thank (18) and the reservoir (29) for conveying water therebetween.

10. An appliance as claimed in any preceding claim, **characterised in that** the reservoir (29) includes means for filling it with water to a given level.

## Patentansprüche

1. Dampfgargerät für Nahrungsmittel, umfassend ein Gehäuse (20) zur Dampfbehandlung von Nahrungsmitteln, einen Behälter (18), um eine Dampferzeugungseinrichtung (30) mit Wasser zu versorgen, und Einrichtungen (24, 28) zum Versorgen des Gehäuses (20) mit Dampf, sowie eine Basis (12) zum Tragen sowohl des Behälters (18) als auch des Gehäuses (20), wobei beide auf dieser Basis abnehmbar angebracht sind, **dadurch gekennzeichnet, dass** ein Reservoir (29) in der Basis (12) angeordnet ist, um Wasser aus dem Wasservorratsbehälter (18) zu empfangen, wobei die Basis Reguliereinrichtungen (33, 35, 37) zum Steuern der Flussmenge des Wassers aus dem Wasservorratsbehälter (18) in das Reservoir (29) einschließt.

2. Gerät nach Anspruch 1, **dadurch gekennzeichnet, dass** die Dampferzeugungseinrichtung eine Heizeinrichtung (30) umfasst, die in der Basis (12) angeordnet ist, Wasser aus dem Reservoir (29) empfängt und es in Dampf umwandelt.

3. Gerät nach Anspruch 1 oder 2, **gekennzeichnet durch** eine Abtropfvorrichtung (19), die zwischen dem Dampfgehäuse (20) und der Basis (12) angeordnet ist.

4. Gerät nach Anspruch 3, **dadurch gekennzeichnet, dass** diese Heizeinrichtung den Dampf durch die Abtropfvorrichtung (19) in das Dampfgehäuse (20) leitet.

5. Gerät nach irgendeinem der Ansprüche 2 bis 4, **dadurch gekennzeichnet, dass** die Heizeinrichtung eine im wesentlichen kreisförmige Heizröhre (30) umfasst.

6. Gerät nach Anspruch 5, **gekennzeichnet durch** eine Dampfkappe (44), die am Oberteil der Basis (12) angeordnet ist, wobei diese Dampfkappe in Fluidverbindung mit der kreisförmigen Heizröhre (30) steht.

7. Gerät nach irgendeinem der vorangehenden Ansprüche, **dadurch gekennzeichnet, dass** die Heizeinrichtung (30) selbst nach der Entnahme des Wasservorratsbehälters (18) aus der Basis (12) betriebsbereit ist, um weiterhin. Wasser aus dem Reservoir (29) zu empfangen.

8. Gerät nach irgendeinem der vorangehenden Ansprüche, **dadurch gekennzeichnet, dass** der Wasservorratsbehälter (18) mit einem federnd vorgespannten Regelventil (37) zum Verhindern des Auslaufens, wenn der Wasservorratsbehälter (18) aus der Basis (12) herausgenommen wird, versehen ist.

9. Gerät nach irgendeinem der vorangehenden Ansprüche, **gekennzeichnet durch** ein biegsames Leitungsrohr (48), das zwischen dem Wasservorratsbehälter (18) und dem Reservoir (29) zum Befördern von Wasser dazwischen angeordnet ist.

10. Gerät nach irgendeinem der vorangehenden Ansprüche, **dadurch gekennzeichnet, dass** das Reservoir (29) eine Einrichtung zum Auffüllen desselben mit Wasser bis zu einer gewissen Höhe einschließt.

## Revendications

1. Un appareil pour la cuisson de la nourriture à la vapeur, comprenant une enceinte (20) pour la nourriture à passer à la vapeur, un bac (18) destiné à fournir de l'eau à des moyens de génération de vapeur (30) et des moyens (24, 48) destinés à fournir de la vapeur à l'enceinte (20) et une base (12) destinée à supporter à la fois le bac (18) et l'enceinte (20), les deux étant montés amovibles sur ladite base, **caractérisé en ce qu'**un réservoir (29) est disposé dans ladite base (12) pour recevoir l'eau provenant du bac d'alimentation en eau (18), la base comportant des moyens de régulation (33, 35, 37) destinés à contrôler le débit de l'eau allant du bac d'alimentation en eau (18) au réservoir (29).

2. Un appareil selon la revendication 1, **caractérisé en ce que** les moyens de génération de vapeur comprennent des moyens de chauffage (30) montés dans la base (12), recevant de l'eau du réservoir (29) et la convertissant en vapeur d'eau.

3. Un appareil selon la revendication 1 ou la revendication 2, **caractérisé en ce qu'**un plateau d'égouttage (19) est disposé entre l'enceinte à vapeur (20) et la base (12).

4. Un appareil selon la revendication 3, **caractérisé en ce que** lesdits moyens de chauffage dirigent la vapeur d'eau vers l'enceinte à vapeur (20) à travers le plateau d'égouttage (19).

5. Un appareil selon l'une quelconque des revendications 2 à 4, **caractérisé en ce que** les moyens de chauffage consistent en un tube de chauffage pratiquement circulaire (30).

6. Un appareil selon la revendication 5, **caractérisé par** un capuchon à vapeur (44) disposé sur le dessus de la base (12), ce capuchon à vapeur étant en communication fluidique avec le tube de chauffage circulaire (30).

7. Un appareil selon l'une quelconque des revendications précédentes, **caractérisé en ce que** les moyens de chauffage (30) peuvent fonctionner de manière à recevoir de manière continue de l'eau du réservoir (29) même après extraction du bac d'alimentation en eau (18) de la base (12).

8. Un appareil selon l'une quelconque des revendications précédentes, **caractérisé en ce que** le bac d'alimentation en eau (18) comporte une soupape de contrôle soumise à un ressort (37), en vue d'empêcher les fuites quand le bac d'alimentation en eau (18) est extrait de la base (12).

9. Un appareil selon l'une quelconque des revendications précédentes, **caractérisé par** un conduit souple (48) disposé entre le bac d'alimentation en eau (18) et le réservoir (29) en vue de faire circuler l'eau entre eux.

10. Un appareil selon l'une quelconque des revendications précédentes, **caractérisé en ce que** le réservoir (29) comprend des moyens de remplissage d'eau jusqu'à un niveau donné.
